# EUROPÄISCHE PATENTSCHRIFT

(11) **EP 0 467 880 B1**
(45) Veröffentlichungstag und Bekanntmachung des Hinweises auf die Patenterteilung: **23.03.1994**
(21) Anmeldenummer: 91890155.4
(22) Anmeldetag: 17.07.1991
(51) Int. Cl.: F16H 57/02

(54) **Schaltgetriebe mit Entlüfter**
Venting device for a gear-box
Boîte de vitesse avec ventilation

(30) Priorität: 20.07.1990 DE 4023188
(43) Veröffentlichungstag der Anmeldung: 22.01.1992
(73) Patentinhaber: STEYR-DAIMLER-PUCH AKTIENGESELLSCHAFT, 1010 Wien (AT)
(72) Erfinder: Gartner, Helfried, A-3321 Ardagger (AT)

(56) Entgegenhaltungen:
- DE-A- 3 337 059
- DE-A- 3 810 344
- US-A- 4 576 059

## Beschreibung

Die Erfindung handelt von einem Schaltgetriebe, dessen Gehäuse mindestens zwei Getriebewellen, mindestens zwei Schaltstangen und eine drehbare und verschiebbare Schaltwelle enthält und einen Entlüfter aufweist, wobei die Schaltwelle in einem Lagerrohr an einer der vier Seiten aus dem Getriebegehäuse herausgeführt ist. Ein derartiges Schaltgetriebe ist z.B. aus der DE-A- 30 00577 bekannt.

Handgeschaltete Getriebe werden entweder mit einem oben aus dem Getriebe ragenden Hebel direkt geschaltet oder mit einem hinter oder neben dem Getriebe angeordneten Hebel, der über eine Schaltwelle in das Getriebe hineinwirkt. Die Anordnung neben dem Getriebe wird vor allem bei Traktoren gewählt, um den Durchstieg zwischen Lenksäule und Fahrersitz zu erleichtern.

Getriebe, und vor allem größere Getriebe, benötigen einen Entlüfter, um Druckänderungen im Gehäuse durch Temperaturänderungen der über dem Schmierölsumpf befindlichen Luft zu verhindern. Derartige Druckänderungen würden zu Leckagen und erhöhtem Verschleiß der Wellendichtungen führen. Entlüfter sind im wesentlichen Stopfen mit einer nach außen führenden Bohrung und sind normalerweise am höchsten Punkt des Getriebedeckels angebracht. Trotz dieser Anordnung tritt doch immer etwas Öl aus, weil Spritzöl auch bis zum Deckel gelangt und dort von der austretenden Luft mitgerissen wird. Die Folge davon sind Ölniederschläge am Boden der Traktorkabine, die zum Ansetzen von Verunreinigungen führen.

Ein weiterer Nachteil der nach oben vorstehenden Anordnung von Entlüfter oder anderem Zubehör, beispielsweise Sensoren für die Position der Schaltorgane, ist, daß sie die zum Erzielen eines ebenen und tiefen Kabinenbodens erwünschte niedere Getriebesilhouette stört.

Es ist daher Aufgabe der Erfindung, eine Anordnung von Entlüfter und gegebenenfalls Schaltsensoren vorzuschlagen, die das Lecken von Öl verhindert und einen ebenen Kabinenboden gestattet.

Dazu ist erfindungsgemäß im Lagerrohr eine Kammer ausgebildet und durch eine unten in der Kammer mündende Öffnung mit dem Inneren des Getriebegehäuses verbunden ist und das Lagerrohr weist im Bereich der Kammer eine Bohrung für die Aufnahme des Entlüfters auf.

Die Kammer im Lagerrohr stellt einen abseits liegenden beruhigten Raum dar, der nur durch eine ebenfalls abseits liegende Öffnung mit dem Inneren des Getriebegehäuses verbunden ist. So ist die Kammer vor Spritzöl weitgehend geschützt. Fallweise mitgerissenes Spritzöl wird in der Kammer abgeschieden und fließt durch die unten in der Kammer mündende Öffnung wieder in das Getriebeinnere zurück. Dadurch kann der Entlüfter dann auch seitlich in die Kammer hineinragen und behindert so die ebene Ausbildung des Kabinenbodens nicht mehr.

Nebenbei wird auch noch eine bessere Schmierung, Abdichtung und Führung der Schaltwelle gewonnen. Letztere gestattet unter Umständen sogar die fliegende Lagerung der Schaltwelle.

In einer ersten Ausführungsform der Erfindung, mit einem an den Getriebedeckel angeformten Lagerrohr, ist die Öffnung als Steigöffnung ausgebildet, die von einer Ausnehmung an der Trennfuge zwischen Getriebegehäuse und Getriebedeckel ausgeht. Die Ausbildung der Öffnung als Steigöffnung mit fertigungsbedingt relativ großem Querschnitt und die Umlenkung der ölhaltigen Luft an der Trennfuge ergibt eine besonders wirksame Ölabscheidung, besonders, wenn in weiterer Ausgestaltung die Ausnehmung an der Trennfuge zwischen Getriebegehäuse und Deckel nur einen schmalen horizontalen Schlitz bildet.

In einer anderen Ausführungsform der Erfindung ist das Lagerrohr am Gehäuse angeschraubt, die Kammer gehäuseseitig durch die Gehäusewand begrenzt und die Öffnung eine Bohrung in der Gehäusewand. Dadurch braucht bei der Gestaltung des Getriebegehäuses und bei der Fertigung keine Rücksicht auf das Lagerrohr genommen zu werden und es ergeben sich einfacher geformte Bauteile.

In weiterer Ausgestaltung der Erfindung durchdringt die Bohrung beide Wände der Kammer, wodurch zwei miteinander fluchtende Bohrungen entstehen, was vor allem bei horizontaler Bohrung günstig ist. So wird ohne höheren Fertigungsaufwand ein zweiter nicht in den Kabinenboden ragender Anschluß, etwa für den Schaltstellungssensor, erhalten. Es besteht auch die Möglichkeit, diese ohne Mehraufwand hergesstellte zweite Bohrung für Getriebemodelle ohne Sensor mit einem Stopfen zu verschließen.

In einer besonders vorteilhaften Weiterbildung der Erfindung weist die Schaltwelle im Bereich der Kammer einen dem Positionssensor zugewandten Nocken auf, der mittels mindestens einer durch die Bohrung für den Getriebeentlüfter zugänglichen Durchschraube befestigt ist. Dadurch ergibt sich eine besonders einfache Montage und genaue Zentrierung des Nockens, weil die Durchschraube ja durch die Bohrung für den Entlüfter zugänglich ist, wenn dieser erst nachher montiert wird.

Im folgenden wird die Erfindung anhand der folgenden Abbildungen näher erläutert:
Fig. 1: Vertikalschnitt durch ein erfindungsgemäßes Getriebe,
Fig. 2: Detailsicht A des Getriebedeckels von unten,
Fig. 3: Vertikalschnitt durch eine Variante des erfindungsgemäßen Getriebes,
Fig. 4: Schnitt BB in Fig. 1.

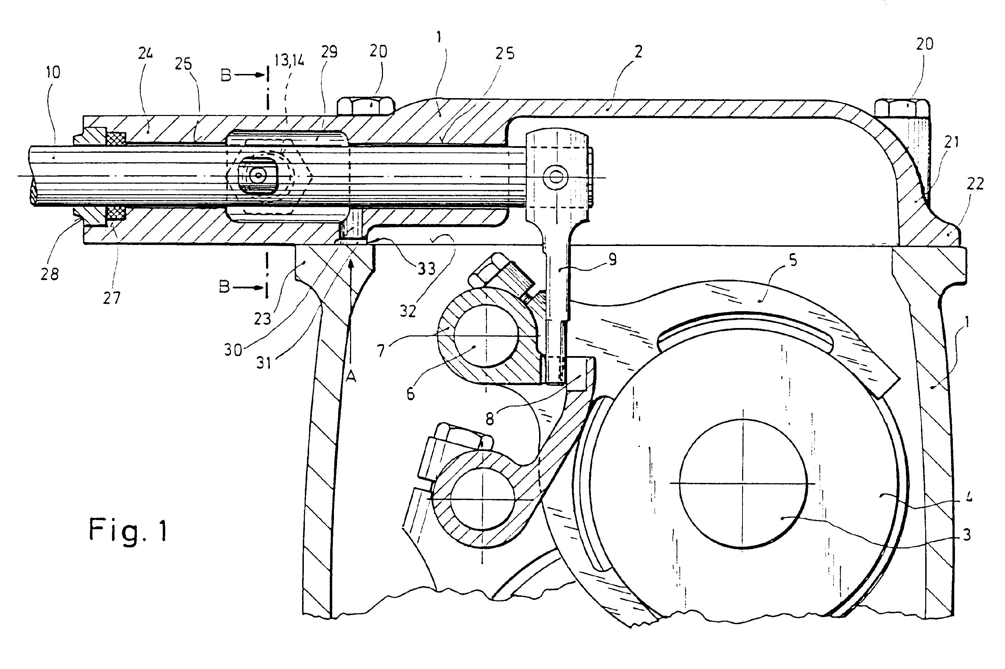

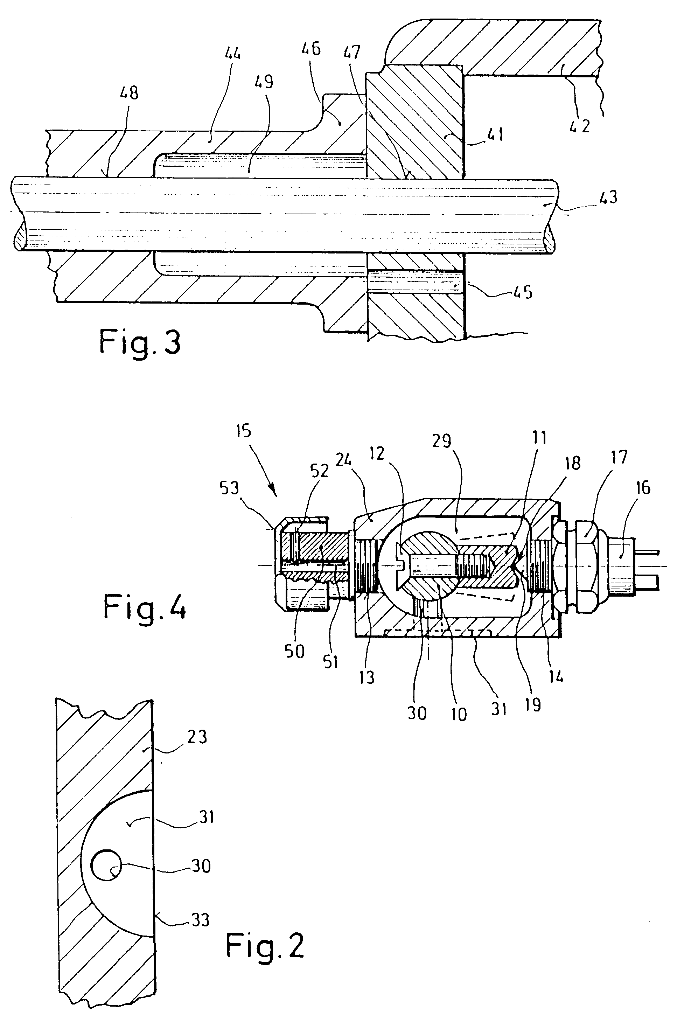

In den Figuren 1 und 2 ist eine Ausführungsform des erfindungsgemäßen Getriebes abgebildet. Es besteht aus einem Gehäuse 1 mit einem Deckel 2, in dessen Innerem eine Getriebewelle 3 mit nicht dargestellten Zahnrädern befindet. Eine Schaltmuffe 4 ist durch eine Schaltgabel 5 verschiebbar, die an einer Schaltstange 6 befestigt ist. An dieser ist auch ein erster Mintnehmer 7 befestigt, in den ein Schaltfinger 9 eingreift, der mit einer drehbaren und verschiebbarn Schaltwelle 10 fest verbunden ist. Der Schaltfinger 9 greift wahlweise entweder in den ersten Mitnehmer 7 oder in den zweiten Mitnehmer 8 ein, der in ähnlicher Weise auf eine nur mehr schematisch dargestellte andere Schaltgabel wirkt.

Der Getriebedeckel 2 bildet rundum einen Deckelflansch 22, der durch Deckelschrauben 20 mit dem Gehäuseflansch 23 verschraubt ist. An einer der Deckelwände 21, hier an der seitlichen, ist ein Lagerrohr 24 angeformt, das heißt einstückig mit dem Lagerdeckel gegossen.

Soweit ist das beschriebene Getriebe vollkommen konventionell und es kann ein beliebiges synchronisiertes oder unsynchronisiertes Getriebe sein. Wesentlich ist nur, daß es sich um ein Getriebe mit einer im oberen Bereich angeordneten Schaltwelle handelt.

Erfindungsgemäß bildet das am Getriebedeckel 2 angeformte Lagerrohr 24 einer innere Führung 25 und eine äußere Führung 26 für die Schaltwelle 10, und dazwischen eine Kammer 29, von deren unterem Teil sich eine Steigöffnung 30 bis zur Trennfuge 32 zwischen dem Gehäuseflansch 23 und dem Deckelflansch 22 erstreckt. Im Deckelflansch 22 ist an der Trennfuge 32 eine, beispielsweise gefräste, Ausnehmung 31 vorgesehen, die mit denn Gehäuseflansch 23 einen Schlitz 33 bildet. Es ist sehr unwahrscheinlich, daß Spritzöl zu diesem abgelegenen kleinen Schlitz gelangt, wird dann aber in der Steigöffnung 30 relativ großen Querschnittes von bei Erwärmung des Getriebes vorbeiströmender Luft nicht mitgerissen und kann, wenn das Getriebe seine Betriebstemperatur erreicht hat, durch diesen Schlitz wieder in das Innere zurückfließen.

Das Lagerrohr 24 ist an seinem äußeren Ende gegenüber der Schaltwelle 10 durch einen Dichtring 27 und einem Abstreifring 28 abgedichtet.

In einer anderen Ausführungsform der Erfindung gemäß Fig. 3, ist das Lagerrohr 44 ein getrennter Bauteil, der mittels eines Flansches 46 an der Gehäusewand 41 angeschraubt ist. Dieses Gehäuse kann über einen Deckel 42 verfügen, könnte aber auch anders geteilt sein. Bei dieser Ausführungsform bildet die Gehäusewand 41 die innere Führung 47 für die Schaltwelle 43 und das Lagerrohr 44 bildet die äußere Führung 48. Die Kammer 49 erstreckt sich bis zur Gehäusewand 41, wodurch die Herstellung des Lagerrohres 44 erleichtert wird. Der untere Teil der Kammer 49 ist über eine Bohrung 45, die zur Sicherheit etwas tiefer angeordnet sein kann, mit dem Inneren des Getriebes verbunden.

In Fig. 4 ist ein Schnitt durch die Kammer 29 dargestellt, ein Schnitt durch die Kammer 49 der Fig. 3 würde sich nur dadurch unterscheiden, daß die Bohrung 45 an die Stelle der Steigöffnung 30 tritt. Das Lagerrohr 24 ist in diesem Schnitt zur Kammer 29 erweitert. Eine Gewindebohrung 13 auf der linken Seite nimmt einen Entlüfter 15 auf, der gewöhnlich aus einem Gewindestopfen 50 mit einer Axialbohrung 52 besteht, der eine mit einem Hut 53 abgedeckte Querbohrung 52 aufweist. Durch die Anbringung des Entlüfters 15 an der beruhigten Kammer 29 ist kein Austreten von Öl zu befürchten. In Verlängerung der Gewindebohrung 13 befindet sich eine Gewindebohrung 14. Diese nimmt einen Sensor 16 auf, der aus einem Gewindestopfen 17 besteht, in dessen Innerem sich die nicht dargestellten elektrischen Teile befinden. Erkennbar ist nur ein Taststift 19, der innen aus dem Stopfen 17 heraus und in eine Einsenkung 18 des Nockens 11 ragt.

Dieser Nocken 11 ist mittels einer Durchschraube 12 mit der Schaltwelle 10 fest verbunden. Beim Zusammenbau wird zuerst der Nocken 11 mit Hilfe eines geeigneten Werkzeuges durch die Gewindebohrung 14 in die Kammer 29 eingeführt und mittels einer durch die Gewindebohrung 13 von der anderen Seite in die Schaltwelle 10 eingeführten Durchschraube festgezogen. Sodann werden Entlüfter 15 und Sensor 16 in ihren jeweiligen Gewindebohrungen 13, 14 festgeschraubt.

In Fig. 4 befindet sich der Taststift 19 in neutraler Stellung. Wird die Schaltwelle 10 verschoben oder verdreht, bewegt sich die Einsenkung 18 des Nockens 11 aus der gezeigten Stellung heraus und drückt den Taststift 19 in den Sensor 16 und erzeugt so ein Signal.

Ob der Sensor auf Drehung oder Verschiebung der Schaltwelle 10 anspricht, hängt von der Form der Einsenkung 18 ab. Je nachdem kann dann das Sensorsignal auch für verschiedene Zwecke verwendet werden: entweder zur Anzeige, welcher Gang eingelegt ist, oder zur Anzeige der gewählten Schaltgasse oder aber zur Anzeige, ob irgendein Gang eingelegt ist. Im letzteren Fall wird das Signal dazu verwendet, das Anlassen des Motors bei eingelegtem Gang zu verhindern, was bei Traktoren unter dem Namen Anlaßsperre bekannt ist.

## Patentansprüche

1. Schaltgetriebe, dessen Gehäuse mindestens zwei Getriebewellen, mindestens zwei Schaltstangen und eine drehbare und verschiebbare Schaltwelle (10) enthält und einen Entlüfter (15) aufweist, wobei die Schaltwelle in einem Lagerrohr (24) an einer der vier Seiten aus dem Getriebegehäuse (1) herausgeführt ist, **dadurch** **gekennzeichnet**, daß im Lagerrohr (24, 44) eine Kammer (29, 49) ausgebildet und durch eine unten in der Kammer (29, 49) mündende Öffnung (30, 45) mit dem Inneren des Getriebegehäuse (1) verbunden ist und daß das Lagerrohr (24, 44) im Bereich der Kammer (29, 49) eine Bohrung (13) aufweist, die den Entlüfter (15) aufnimmt.

2. Schaltgetriebe nach Anspruch 1 mit einem an einen Getriebedeckel (2) angeformten Lagerrohr (24), **dadurch** **gekennzeichnet**, daß die Öffnung (30) als Steigöffnung ausgebildet ist, die von einer Ausnehmung (31) an der Trennfuge (32) zwischen Getriebegehäuse (1) und Getriebedeckel (2) ausgeht.

3. Schaltgetriebe nach Anspruch 2, **dadurch gekennzeichnet,** daß die Ausnehmung (31) an der Trennfuge (32) einen schmalen horizontalen Schlitz (33) bildet.

4. Schaltgetriebe nach Anspruch 3, **dadurch gekennzeichnet**, daß das Lagerrohr (44) an einer Gehäusewand angeschraubt ist, daß die Kammer (49) gehäuseseitig durch die Gehäusewand (41) begrenzt ist und daß die Öffnung (45) eine Bohrung in der Gehäusewand (41) ist.

5. Schaltgetriebe nach Anspruch 1, **dadurch gekennzeichnet,** daß die horizontale Bohrung (13, 14) beide Seitenwände der Kammer (29, 49) durchdringt, wodurch zwei miteinander fluchtende Bohrungen (13, 14) entstehen.

6. Schaltgetriebe nach Anspruch 5, **dadurch gekennzeichnet,** daß die Bohrungen (13, 14) im wesentlichen horizontal sind.

7. Schaltgetriebe nach Anspruch 5, **dadurch gekennzeichnet,** daß in der dem Entlüfter (15) gegenüberliegenden Bohrung (14) ein Positionssensor (16) untergebracht ist.

8. Schaltgetriebe nach Anspruch 7, **dadurch gekennzeichnet**, daß die Schaltwelle (10, 43) im Bereich der Kammer (29, 49) einen dem Positionssensor (16) zugewandten Nocken (11) aufweist, der mittels mindestens einer durch die Bohrung (13) für den Entlüfter (15) zugänglichen Durchschraube (12) befestigt ist.

## Claims

1. Change-speed gearbox the casing of which contains at least two transmission shafts, at least two gearshift rods and a rotatable and longitudinally displaceable gearshift shaft (10) and is provided with an air breather (15), the gearshift shaft being led out of the casing on any of the four sides of the casing (1) through a guiding tube (24), **caracterized** in that a chamber (29,49) is provided within the guiding tube (24,44) and connected with the inside of the casing (1) by a port (30,45) opening out in the lower region of the chamber (29,49) and in that the guiding tube (24,44) is provided with a bore (13) in the region of the chamber (29,49), the bore (13) receiving the air breather (15).

2. Change-speed gearbox according to claim 1 werein the guiding tube (24) is united in one piece with a gearbox cover (2), **ca****racterized** in that the port (30) is designed as an uptake from a recess (31) in the plane of separation (32) between casing (1) and cover (2).

3. Change-speed gearbox according to claim 2, **caracterized** in that the recess (31) in the plane of separation (32) is a thin horizontal slot (33).

4. Change-speed gearbox according to claim 3, **caracterized** in that the guiding tube (44) is screwed to a wall of the casing, in that the chamber (49) is defined on the side of the casing by the casing wall (41) and in that the port (45) is a bore in the casing wall (41).

5. Change-speed gearbox according to claim 1, **caracterized** in that the horizontal bore (13,14) penetrates both walls of the chamber (29,49), in this way creating two bores (13,14) in alignment with each other.

6. Change-speed gearbox according to claim 5, **caracterized** in that the bores (13,14) are essentially horizontal.

7. Change-speed gearbox according to claim 5, **caracterized** in that the bore (14) opposite the air breather(15) houses a position sensor (16).

8. Change-speed gearbox according to claim 7, **caracterized** in that the gearshift shaft (10,43) is provided in the region of the chamber (29,49) with a cam (11) directed towards the position sensor (16), the cam being fixedly secured by at least one bolt (12) accessible through the bore (13) for the air breather (15).

## Revendications

1. Boîte de vitesses, dont le carter comprend au moins deux arbres, au moins deux tringles et un arbre de commande (10) tournant et coulissant, et qui est muni d'un évent (15), dans laquelle l'arbre de commande sort d'un des quatre cotés du carter (1) de la boîte de vitesses dans un tube de guidage (24), caractérisée en ce que dans le tube de guidage (24,44) est prévue une chambre (29,49) reliée à l'intérieur du carter (1) de la boîte par l'intermédiaire d'une ouverture (30,45) débouchant dans la partie inférieure de la chambre (29,49), et en ce que le tube de guidage (24) présente dans la région de la chambre (29,49) un perçage (13) destiné à recevoir l'évent (15).

2. Boîte de vitesses selon la revendication 1, avec un tube de guidage (24) qui est d'une seule pièce avec un couvercle de carter (22), caractérisée en ce que l'ouverture (30) est agencée montante, en montant à partir d'une encoche (31) située au niveau du joint de séparation (32) entre le carter (1) et le couvercle de carter (2).

3. Boîte de vitesses selon la revendication 2, caractérisée en ce que l'encoche (31) située au niveau du joint de séparation (32) est une fente mince (33) horizontale.

4. Boîte de vitesses selon la revendication 3, caractérisée en ce que le tube de guidage (44) est vissé sur une paroi du carter, en ce que la chambre (49) est délimitée du côté du carter par la paroi (41) du carter, et que l'ouverture (45) est un perçage dans la paroi (41) du carter.

5. Boîte de vitesses selon la revendication 1, caractérisée en ce que le perçage horizontal (13,14) est réalisé par pénétration des deux parois latérales de la chambre (29,49), réalisant ainsi deux perçages (13,14) alignés l'un avec l'autre.

6. Boîte de vitesses selon la revendication 5, caractérisée en ce que les perçages (13,14) sont essentiellement horizontaux.

7. Boîte de vitesses selon la revendication 5, caractérisée en ce qu'un capteur de position (16) est logé dans le perçage (14) à l'opposé de l'évent (15).

8. Boîte de vitesses selon la revendication 7, caractérisée en ce que l'arbre de commande (10,43) comporte, dans la région de la chambre (29,49), une came (11) faisant face au capteur de position (16) et reliée à l'arbre par au moins une vis traversante (12) accessible à travers l'alésage (13) destiné à recevoir l'évent (15).
